# EUROPEAN PATENT APPLICATION

(11) **EP 0 832 908 A1**
(43) Date of publication of application: **01.04.1998**
(21) Application number: 97307678.9
(22) Date of filing: 30.09.1997
(51) Int. Cl.: C08G 18/10, C08G 18/12, C09D 175/04

(54) **Corrosion protective polyurea coatings**

(30) Priority: 30.09.1996 US 724240
(71) Applicant: Brinton, William J., Federal Way, Washington 98023 (US)
(72) Inventor: Brinton, William J., Federal Way, Washington 98023 (US)
(74) Representative: Coleiro, Raymond

(57) **Abstract**

A surface of a structure susceptible to corrosion is coated with at least a primer layer formed by moisture curing a composition comprising a polyurethane type prepolymer and micaceous iron oxide. The prepolymer is curable to form a polyurethane-urea resin coating containing the micaceous iron oxide.

## Description

The present invention relates to corrosion protective coatings for the surfaces of metal structures. The corrosion protective coating of the present invention can be particular useful with those metal structures exposed to severely corrosive environments.

The introduction of corrosion protective coatings onto metal surfaces is well known in the art. However, traditional alkyd, vinyl and phenolic low-cost coatings suffer from a variety of problems. The more serious of these problems include application restrictions, mixing errors and delays due to inclement field conditions. For example, traditional coatings cannot typically be applied in humidities over 85 percent or when the surface to be treated is within 5°F of the dew point. Moreover, the coatings cannot be applied if the temperature falls below a particular level. For most of the popular plural component epoxy and inorganic coatings, the lower limit is 35-45°F (ca 1.5-7°C).

While certain cold weather or surface tolerant speciality primers have been developed, their use is still subject to a variety of problems because not all of the components of these coating systems are weather or moisture tolerant.

One attempted solution to the foregoing problems has involved the use of moisture-curable urethanes. These coatings, which are more appropriately called "polyureas" were first developed by Bayer in Germany about twenty-five to thirty years ago. While these urethanes have proven effective in preventing corrosion, they remain extremely difficult to manufacture, particularly on a large scale basis.

Despite the manufacturing problems and the fact they have been known for years, much of the work in this area continues to be centred around only a few resins that are based on the Bayer technology, e.g., Desmodur E 21 of Mobay Chemical Company. For example, US-A-4279962 uses the resin in a dual-layer protective coating for cathodically protected metal surfaces. The two-layer coating includes a base coating having highly divided zinc together with the Desmodur E 21 resin, and a cover coating comprising a mixture of tar with polyisocyanates, fillers, dryers, solvents and micaceous iron ore or hematite powder.

Only recently have alternative single component, moisture cure urethane coatings been developed. This technology is the subject of an article by W. Brinton entitled "Moisture cured Urethane for Wet Environments" from the August 19, 1991 issue of American Paint and Coating Journal, which is incorporated by reference in its entirety.

This article discloses certain corrosion protective coating materials that include a primer coat of single-component, moisture-curable type polyurethane-urea resin containing zinc, an intermediate coat of single-component, moisture-curable type polyurethane-urea resin containing micaceous iron oxide and a top coat of a single-component, moisture-curable type aliphatic polyurethane-urea resin optionally containing micaceous iron oxide.

These coatings are disclosed as having improved stability, interlayer adhesivity and hardening at low temperature/high humidity environments as compared with those corrosion protective coating materials traditionally considered usable in these environments.

Despite the effectiveness of these new coatings, further improvements in the combination of corrosion protective performance, workability and quality under high humidity conditions are still desired.

The present invention provides corrosion protective coatings capable of providing that combination of improved corrosion protection with workability, for use with the surfaces of metal structures.

According to a first aspect, the present invention provides the use, for providing a primer layer or sole layer of a coating for protecting a surface of a structure from corrosion of a composition comprising (1) a polyurethane type prepolymer resin, which said resin is moisture-curable to provide a cured polyurethane urea resin and (2) micaceous iron oxide and/or zinc oxide.

According to a second aspect, the invention provides a composite material comprising a structure having a surface susceptible to corrosion and coated thereon a primer layer or sole layer of a coating comprising a cured polyurethane urea resin and micaceous iron oxide.

According to a third aspect, the invention provides a method of protecting a surface of a structure from corrosion, which method comprises applying to the surface a coating of a composition comprising (1) a polyurethane prepolymer resin which is moisture-curable to provide a cured polyurethane urea resin and (2) micaceous iron oxide and subjecting the composition to curing in the presence of moisture.

A coating used in accordance with the present invention for providing protection against corrosion (hereinafter "corrosion protective coating") may comprise a plurality of resin layers on a surface such as a metal surface. susceptible to corrosion, of a structure, for example, any exposed surface of a metal structure. The layers can include a primer layer (especially a spot primer layer), an intermediate layer and a top layer where at least the primer layer comprises a moisture-curable polyurethane prepolymer resin curable to provide a cured polyurethane-urea resin. Hereinafter, such a moisture-curable prepolymer resin is referred to as a "polyurethane-urea type resin".

The primer layer also preferably contains zinc powder and/or micaceous iron oxide in an amount of 70-95 percent, by weight of the total weight of the layer, after drying.

In one preferred embodiment, the corrosion protective coating includes a primer layer in conjunction with an intermediate layer and a top layer, and each of the layers includes a moisture-curable polyurethane-urea type resin and micaceous iron oxide.

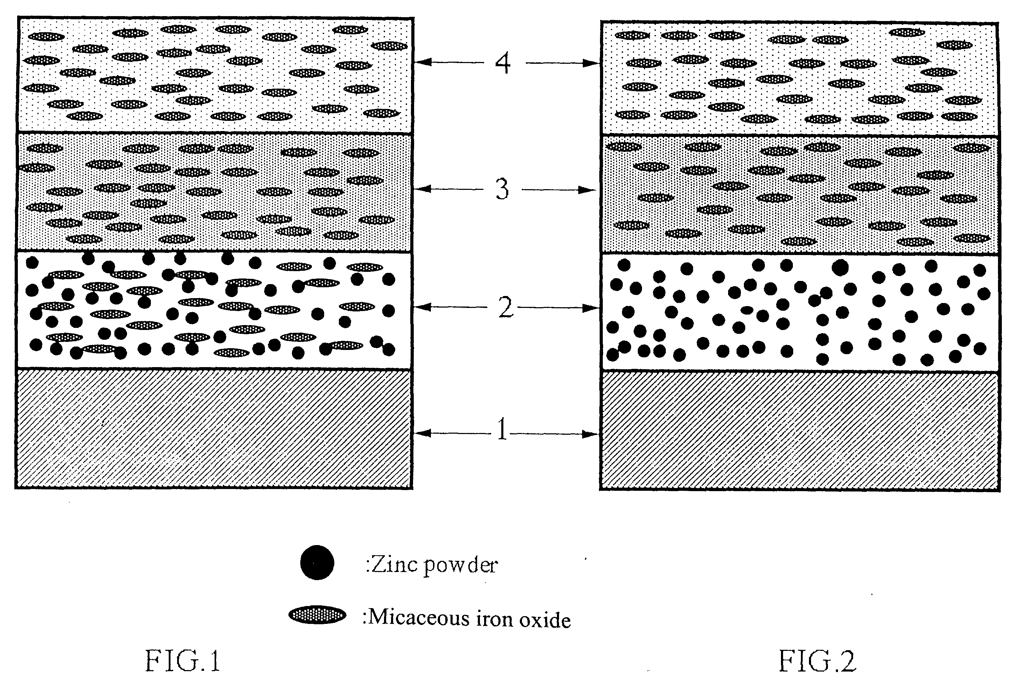

Preferred embodiments of the invention will now be described with reference to the accompanying drawings, in which Figs. 1 and 2 illustrate respective composites embodying the present invention. These composites each include a metal structure having a surface susceptible to corrosion and a cured corrosion projective coating consisting of a primer layer 2, intermediate layer 3 and top layer 4.

In a corrosion protective coating to be applied, in accordance with the invention to a surface of a structure, in at least one layer, or the layer, of the coating comprises a moisture-curable polyurethane-urea type resin.

The single component, moisture-curable polyurethane-urea type resins that can be employed in the present invention include those single component, isocyanate prepolymer resins recognized in the art.

Suitable prepolymer resins can be provided, for example, by reacting a polyether, polyester and acrylic resin with a polyisocyanate such as diphenylmethane diisocyanate, toluene diisocyanate (TDI), hexamethylene diisocyanate (HDI) or isophorone diisocyanate (TPDI), to obtain a solution comprising an isocyanate terminated single-component, moisture-curable polyurethane prepolymer. In particular, prepolymer resins having improved stability can be provided from triethyl ortho-formate (OF) and p-toluene sulphonylisocyanate (PTSI).

A layer can then be formed on the surface to be treated from a solution of the prepolymer. For example, the prepolymer solution can be applied onto a surface of a base plate, reacted with moisture in the atmosphere and on the plate, and dried to remove the solvent. The prepolymer reacts to produce urea bonds and forms a hardened coating layer of polyurethane-urea resin.

The coating comprises at least one layer, and preferably, at least two layers. Each of the layers can be formed, as described above, by applying paint solution(s) to the desired surface. The coating solution(s) can be applied by techniques recognized in the art. Such techniques can include spraying, painting and dipping.

The metal structure can comprise any metal that is susceptible to corrosion, with steel being the most common. Moreover, the surface to be coated can be untreated or treated, e.g., painted or cleaned, by techniques recognized in the art prior to coating in accordance with the present invention.

The prepolymer-containing solution(s) employed in the coating layers can be the same as or different from one another depending on the environment in which the coated metal is to be employed.

In one preferred embodiment, the coating includes a primer layer, an (optional) intermediate layer and a top layer. The present invention will be further explained with reference to this embodiment. However, the present invention is not in any way limited to that embodiment.

Turning firstly to the primer layer, zinc powder and/or micaceous iron oxide are preferably included in the prepolymer solution in an amount such that they are presented in the primer layer, after drying, in an amount of 70-95 percent by weight, preferably 75-90 percent by weight.

If the total content of zinc powder and/or micaceous iron oxide in the primer layer is less than 70 percent by weight, the desired corrosion protection may be difficult to obtain. On the other hand, if present in excess of 95 percent by weight, applicability of the solution may be more difficult.

In one embodiment capable of providing improved corrosion protection and applicability, zinc powder and micaceous iron oxide are added to the primer layer-forming solution in an amount such that the primer layer, after drying, contains zinc powder in an amount of 50 percent by weight or more, and micaceous iron oxide in an amount of 30 percent by weight or less.

It has been found that corrosion protection can be further improved where a zinc powder is added to the primer layer forming solution such that the zinc is present in the primer layer after drying in an amount of 85 percent by weight or more.

On the other hand, it has also been found that where a surface that is effectively cleaned, e.g., blast cleaned, prior to applying the coating, effective corrosion protection can be provided without the use of micaceous iron oxide.

If the metallic surface to be coated is a non-ferrous metal such as zinc plating, stainless steel or aluminum, it is preferable to use a primer layer containing a polyurethane urea resin and micaceous iron oxide as essential ingredients, in view of long-term adhesion. In this case, it is not necessary to use zinc powder.

In the corrosion protective coating of the present invention, it is often preferable to provide an intermediate layer on the primer layer.

A solution for forming an intermediate layer preferably includes one or more of micaceous iron oxide, zinc powder and tar. Because of its ability to provide more effective corrosion protection, paint application and layer to layer adhesion, the inclusion of micaceous iron oxide, either alone or in combination with either zinc oxide or tar, is preferred.

However, the colouring of coating layers containing micaceous iron oxide, zinc powder and tar would be restricted to dark colours. Thus, in those environments where a bright colour is required, the intermediate layer forming solution can be at least substantially free from micaceous iron oxide, zinc powder and tar.

By "at least substantially" it is meant that, if the intermediate layer contains such components, they are present in an amount of 1 percent by weight or less.

In the corrosion protective coating applied in accordance wilth the present invention, it is further preferable to include a top layer. The top layer is typically provided on the intermediate layer. However, if the metal structure is installed in an environment that is considered only moderately corrosive, such as in a mountainous region, the top layer may be provided immediately onto the primer layer, omitting the intermediate layer.

As was the case with the primer and the intermediate layer, the top layer can be formed from a solution comprising at least one single-component, moisture-curable type polyurethane prepolymer having the isocyanate terminal thereon. Because the top layer should be resistant to weathering, the use of an alicyclic or aliphatic isocyanate polyurethane prepolymer is preferred.

However, we believe that the intended corrosion protection is largely provided by the primer layer and/or intermediate layer. Accordingly the resin constituting the top layer can comprise resins other than the single-component, moisture-curable type polyurethane-urea type resin. Thus, other suitable resin paints for the top layer include commercially available phthalic resin paints, chlorinated rubber resin paints, polyurethane resin paints, fluorocarbon resin paints, alkyd resin paints, silicone alkyd resin paints, tar epoxy resin paints, tar urethane resin paints, and acrylic silicone resin paints.

Because the top layer largely determines the appearance of the metal structure, the additives included therein should be chosen depending on the requirements for gloss or colour or both.

For example, when the surface is required to be not glossy and/or of a subdued colour, the combination of an intermediate layer containing micaceous iron oxide or micaceous iron oxide and zinc powder and a top layer containing micaceous iron oxide is preferred. In such cases, micaceous iron oxide is preferably added to the top layer forming solution so that it is contained in the top layer after drying. Furthermore, a coating comprising micaceous iron oxide containing primer layer, micaceous iron oxide containing intermediate layer and micaceous iron oxide containing top layer can provide particularly superior protection from corrosion.

On the other hand, where the desired surface is glossy and/or of a relatively bright colour, the top layer is preferably at least substantially free of micaceous iron oxide.

Conventional primers containing zinc powder are "inorganic zinc rich paints" or "organic zinc rich paints". The inorganic zinc rich paints showing especially excellent corrosion performance require mist coat for overcoating, since they have a porous structure. However, a primer of a moisture-curable polyurethane-urea type resin of the present invention containing zinc powder as an essential ingredient can be overcoated with a moisture-curable polyurethane type resin as an intermediate or top coat, or with other commercially available paints without a mist coat.

The top layer may be employed in combination with an intermediate layer containing micaceous iron oxide or micaceous iron oxide and zinc powder, or an intermediate layer at least substantially free of these substances.

In those environments, e.g., metal structures in a recreational ground, where colours of a glossy tone are desired, it is preferable that both the intermediate layer and the top layer are at least substantially free of micaceous iron oxide and zinc powder.

Where a metal structure is situated in a severe corrosive environment, e.g., sea water, it is preferable to form an intermediate layer containing micaceous iron oxide and tar, then provide a top layer containing micaceous iron oxide and tar thereover. In this case, the top layer forming single-component, moisture-curable polyurethane type prepolymer may not necessarily be alicyclic or aliphatic but may employ the same as the single-component, moisture-curable polyurethane type prepolymer used in the intermediate layer.

In the corrosion protective coating of the present invention, the solution of the moisture-curable polyurethane type prepolymer forming the primer, intermediate and top layers of the single-component, moisture-curable polyurethane-urea type resin may contain other additives normally employed in paints, such as colouring pigments, titanium oxide, aluminum flakes, catalysts, fillers, ultraviolet-dispersants, antigelling agents and solvents.

The corrosion protective coating applied in accordance with the present invention can be employed in environments requiring heaving corrosion protection such as road and bridge structures, electric power, oil and other energy related plants and equipment, factory equipment of paper and food industries, ship and port equipment, recreation ground, swimming pool and other amusement facilities, and environment related plants and equipment. Moreover, it is suitably usable for repainting at sites subject to change of weather or metal surface condition.

The corrosion protective coating applied in accordance with the present invention can provide improved protection from corrosion without impairing the good workability and applicability which are the features of the single-component, moisture-curable polyurethane-urea type resins. Moreover, the adhesive property of the coating for poorly prepared metal surfaces can be improved, while superior anti-corrosion property can be maintained over a long period of time.

By overcoating the intermediate and top layers comprising a single-component, moisture-curable polyurethane-urea type resin on the primer layer provided by this invention, it is possible to maintain corrosion protection, gloss retention, anti-discolouration, anti-blistering over a long period of time. However, in another embodiment of the invention, weather resistance can be increased by overcoating commercially available intermediate and top coat adopted to the conventional anti-corrosion coating systems on the primer layer provided by the present invention.

From the above, it is clear that coatings applied in accordance with the present invention are especially suited for use in severely corrosive environments such as those encountered, for example, by structures such as bridges, harbour facilities and ships.

Embodiments of the present invention will now be described in even greater detail with reference to the following Examples, which are solely illustrative in nature and do not limit the scope of the present invention.

### EXAMPLES

In the following examples of structures of the invention which corrosion protective coatings have been applied, the corrosion protective performance is measured by the corrosion protection test by salt fog test under ASTM B117 and is evaluated by the spraying time until generation of rust.

### Examples 1-4

A steel plate having on it a layer of rust was generated by spraying an aqueous solution of 3% NaCl at a frequency of once a week and exposing it to the atmosphere for 3 months. The rust was then removed with a power tool to a surface clean level of ISO St3. The steel plate then had a polyurethane-urea type resin paint shown in Table 1 applied to it for providing a primer coat, intermediate coat and top coat under the conditions of humidity at 98% and temperature at 20°C and the steel plate thus coated was then dried under the conditions of humidity 98% and temperature 20°C for 1 week and taken as a test specimen.

Then, with an X-cut scribe given to the coated surface to reach the metal surface, the specimen was subjected to a combined cycle test with the testing conditions (4 steps, 6 hours) shown in Table 2 as one cycle for evaluation of the corrosion protective performance, and the results shown in Table 3 were obtained. In the test, those parts of the film which were within about 10mm from the periphery of the specimen and within 2mm on the respective sides of the scribe given to the film were taken to be outside of the evaluation.

The specimen was also subjected to the salt fog test under ASTM B117, with the results thereof shown in Table 3.

### Examples 5 and 6

A steel plate having the surface prepared by sand blasting to a level of ISO 5a2.5 had a polyurethane-urea type resin shown in Table 4 applied to it for providing a primer coat, intermediate coat and top coat under the conditions of humidity 98% and temperature 20°C and was then dried at humidity 98% and temperature 20°C for 1 week.

Then, with an X-cut scribe given to the coated surface to reach the metal surface, the specimen was subjectcd to a combined cycle test with the test conditions (4 steps, 6 hours) shown in Table 2 as one cycle for evaluation of the corrosion protective performance, and the results shown in Table 5 were obtained. In the test, those parts of the film within about 10 mm from the periphery of the specimen and within 2 mm on the respective sides of the scribe given to the film were taken to be outside of the evaluation.

The specimen was also subjected to the salt fog test under ASTM R117, with the results thereof shown in Table 5.

### Examples 7 and 8

A material to be coated had the surface preparation according to the method of Example 1 and had the respective primer coat, intermediate coat and top coat shown in Table 6 applied to it under the conditions of humidity 60% and temperature 20°C. It was then dried for 1 week under the conditions of humidity 60% and temperature 20°C and taken as a test specimen.

With an X-cut scribe given to the coated surface to reach the metal surface, the specimen was subjected to a combined cycle test with the test conditions (4 steps, 6 hours) shown in Table 2 taken as 1 cycle for evaluation of the corrosion protective performance, and the results shown in Table 6 were obtained. In the test, those parts of the film which were within about 10 mm from the periphery of the specimen and within 2 mm from the respective sides of the scribe given to the film were taken to be outside of the evaluation.

### Example 9

A material to be coated had the surface preparation according to the method of Example 5 and had a primer coat paint used in Example 1 applied to it. It was then immediately submerged in water at 20°C and, after allowing it to stand for 7 days, it had a bonding strength of 13 kg/cm² measured according to the method specified in ASTM D4541.

### References 1 and 2

A material to be coated was prepared according to the method of Example 1, and had the primer coat, intermediate coat and top coat shown in Table 1 applied to it under the conditions of humidity 60% and temperature 20°C and was then dried for 1 week under the conditions of humidity 20% and temperature 20°C and taken as a test specimen.

With an X-cut scribe given to the film surface to reach the metal surface, the specimen was subjected to the combined cycle test under the conditions shown in Table 2 for evaluation of the corrosion protective performance, and the results shown in Table 7 were obtained.

This specimen was subjected to the salt fog test under ASTM B117, and there were obtained the results shown in Table 7.

### Reference 3

A material to be coated had the surface preparation according to the method of Example 5 and had an organic zinc-rich paint (Zinkee 8000HB; Product of Nippon Paint Co.) applied to it at a rate of 300 g/m³. It was then immediately submerged in water at 20°C and allowed to stand for 7 days. It had a bond strength of 0 kg/cm² measured according to the method specified in ASTM D4541,

**TABLE 1**

| Components | Composition of components in dry film | | | |
|---|---|---|---|---|
| | Ex. 1 (Ref. 1) | Ex. 2 | Ex. 3 | Ex. 4 (Ref. 2) |
| Primer coat | | | | |
| Vehicle | 15 | 15 | 15 | 15 |

| Pigments | | | | |
|---|---|---|---|---|
| Micaceous iron oxide | 20 | 20 | 20 | 20 |
| Zinc powder | 60 | 60 | 60 | 60 |
| Others | 3 | 3 | 3 | 3 |
| Additives | 2 | 2 | 2 | 2 |
| Dry film thickness (µm) | 75 | 75 | 75 | 75 |

| Intermediate coat | | | | |
|---|---|---|---|---|
| Vehicle | 42 | 3 | 46 | 51^{*1} |
| Pigments | | | | |
| Micaceous iron oxide | 40 | 25 | - | 35 |
| Zinc powder | - | 39 | - | - |
| Others | 16 | 4 | 51 | 12 |
| Additives | 2 | 2 | 3 | 2 |
| Dry film thickness (µm) | 75 | 75 | 75 | 150 |

| Top coat | | | | |
|---|---|---|---|---|
| Vehicle | 54 | 83 | 98 | 51^{*1} |

| Pigments | | | | |
|---|---|---|---|---|
| Micaceous iron oxide | 38 | - | - | 35 |
| Others | 6 | - | - | 12 |
| Additives | 2 | 3 | 2 | 2 |
| Dry film thickness (µm) | 75 | 40 | 40 | 150 |

| | | | | |
|---|---|---|---|---|
| *1: Vehicle contains 23 percent, by weight of the dry film weight, of refined tar. | | | | |

**TABLE 2**

| Steps | Tests |
|---|---|
| 1 | Salt water spray test 5% aqueous solution of NaCl, 30±2°C, 0.5h |
| 2 | Wetting test 30±2°C, 95±3 % RH, 1.5h |
| 3 | Hot air drying test 50±2°C, 2.0h |
| 4 | Warm air drying test 30±2°C, 2.0h |

**TABLE 3**

| Test items | Ex. 1 | Ex. 2 | Ex. 3 | Ex. 4 |
|---|---|---|---|---|
| Combined cycle test | | | | |
| Cycles | 360 | 360 | 360 | 360 |
| X-cut | Within 1mm blisters at the scribe area | Within 1mm blisters at the scribe area | Within 1mm blisters at the scribe area | Within 1mm blisters at the scribe area |
| Normal | No rust spots, no blistering | No rust spots, no blistering | No rust spots, no blistering | No rust spots, no blistering |

| Salt fog test | | | | |
|---|---|---|---|---|
| 2000h | No rust spots no blistering | No rust spots no blistering | No rust spots no blistering | No rust spots, no blistering |

**TABLE 4**

| Components | Composition of components in dry film (wt%) | |
|---|---|---|
| | Ex. 5 | Ex. 6 |
| Primer coat | | |
| Vehicle | 8 | 8 |

| Pigments | | |
|---|---|---|
| Zinc powder | 88 | 88 |
| Others | 3 | 3 |
| Additives | 1 | 1 |
| Dry film thickness (µm) | 75 | 75 |

| Intermediate coat | | |
|---|---|---|
| Vehicle | 42 | 46 |

| Pigments | | |
|---|---|---|
| Micaceous iron oxide | 40 | - |
| Others | 16 | 51 |
| Additives | 2 | 3 |
| Dry film thickness (µm) | 75 | 75 |

| Top coat | | |
|---|---|---|
| Vehicle | 54 | 98 |

| Pigments | | |
|---|---|---|
| Micaceous iron oxide | 38 | - |
| Others | 6 | - |
| Additives | 2 | 2 |
| Dry film thickness (µm) | 75 | 40 |

**TABLE 5**

| Test items | Ex. 5 | Ex. 6 |
|---|---|---|
| Combined cycle test | | |
| Cycles | 480 | 480 |
| X-cut scribe part | No rust spots, no blistering | No rust spots, no blistering |
| Normal part | No rust spots, no blistering | No rust spots, no blistering |

| Salt fog test | | |
|---|---|---|
| 4000h | No rust spots, no blistering | No rusts spots, no blistering |

**TABLE 6**

| Components | Composition of components in dry film (wt%) and paints | |
|---|---|---|
| | Ex. 7 | Ex. 8 |
| Primer coat | | |
| Vehicle | 15 | 15 |
| Pigments | 20 | 20 |
| Micaceous iron oxide | 20 | 20 |
| Zinc powder | 60 | 60 |
| Others | 3 | 3 |
| Additives | 2 | 2 |
| Dry film thickness (µm) | 75 | 75 |

| Intermediate coat | | |
|---|---|---|
| Paints | Phthalic resin paint intermediate coat (Zuvoid SR intermediate coat) | Polyurethane resin paint intermediate coat (V Top H intermediate coat) |
| Dry film thickness (µm) | 75 | 75 |

| Top coat | | |
|---|---|---|
| Paints | Phthalic resin coat (Zuvoid SR Top coat) | Polyurethane (V Top H Top coat) |
| Dry film thickness (µm) | 25 | 25 |

| Combined cycle test | | |
|---|---|---|
| Cycles | 120 | 120 |
| X-cut scribe part | No rust spots, no blistering | No rust spots, no blistering |
| Normal part | No rust spots, no blistering | No rust spots, no blistering |

**TABLE 7**

| Test items | Ref. 1 | Ref. 2 |
|---|---|---|
| Combined cycle test | | |
| Cycles | 360 | 360 |
| X-cut scribe part | Within 1mn blisters at the scribe area | No rust spots, no blistering |
| Normal part | No rust spots, no blistering | No rust spots, no blistering |

| Salt fog test | | |
|---|---|---|
| 2000h | No rust spots, no blistering | No rust spots, no blistering |

### Example 10

After completion of the intermediate coat in Example 5, a commercially available polyurethane resin paint (V Top HB produced by Dai Nippon Toryo Co., Ltd.) was applied as a top coat to have a dry film thickness of 50 µm, and a salt fog test of 2000 hours was carried out according to ASTM B117. Neither the X-cut scribe part nor the normal part showed any rust or blister.

### Example 11

After completion of the primer coat in Example 5, a commercially available tar epoxy resin paint (SDC Coat produced by Dai Nippon Toryo Co., Ltd.) was applied to have a dry film tickness of 240 µm, and a salt fog test of 4000 hours was carried out according to ASTM B117. Neither the X-cut scribe part nor the normal part showed any rust or blister.

### Example 12

A galvanized steel sheet with 550 g/m² of zinc deposited on it had its surface ground by sand paper, coated with the top coat of Example 1, and dried at 20°C for 7 days. The specimen was kept in an atmosphere of 50 ± 1°C and 95 % relative humidity for 90 days, and the bonding strength was measured according to ASTM D 4541, and found to be 40 kgf/cm².

## Claims

1. Use, for providing a primer layer or sole layer of a coating for protecting a surface of a structure from corrosion, of a composition comprising (1) a polyurethane type prepolymer resin, which said resin is moisture-curable to provide a cured polyurethane urea resin and (2) micaceous iron oxide,

2. Use, according to claim 1, for providing the primer layer of the coating and in which the primer layer is overcoated with at least one additional layer.

3. Use, according to claim 1 or claim 2, wherein the composition additionally comprises (3) zinc powder.

4. Use, according to claim 3, wherein the zinc powder content in the primer layer is at least 85% by weight of the total weight of the layer after drying.

5. Use, according to claim 4, wherein the primer layer contains zinc powder and micaceous iron oxide in a total amount of 75-90 percent by weight of the total weight of the layer, after drying.

6. Use, according to claim 4 or claim 5, wherein the amount of zinc powder in the primer layer is 50 percent by weight or more and the amount of micaceous iron oxide is 30 percent by weight or less, based on the total weight of the layer, after drying.

7. Use, according to any one of claims 2 to 5, wherein the overcoating or each overcoating independently of the other, is formed by a material selected from polyurethane resins, epoxy resins, chlorinated rubber resins, alkyd resins, phthalic resins, fluorine resins, phenol resins, acrylic resins and acrylic silicone resins.

8. Use, according to claim 7, wherein at least one overcoating is formed from a polyurethane resin which is moisture-curable to provide a cured polyurethane-urea resin.

9. Use, according to any one of claims 2 to 8, wherein a said composition is used to provide each of a primer layer, an intermediate layer and a top layer.

10. Use, according to claim 9, wherein the intermediate layer further comprises zinc powder.

11. Use, according to claim 9 or claim 10, wherein the intermediate layer further comprises tar.

12. Use, according to any one of claims 9 to 11, wherein the top layer further comprises tar.

13. Use, according to any one of claims 1 to 8, wherein a top layer substantially free of micaceous iron oxide is used.

14. Use, according to any one of the preceding claims, wherein the surface of the structure to be protected from corrosion is a metal surface.

15. A composite material comprising a structure having a surface susceptible to corrosion and coated thereon a primer layer or sole layer of a curing comprising a cured polyurethane-urea resin and micaceous iron oxide.

16. A composite material according to claim 15, wherein the said surface susceptible to corrosion is a metal surface.

17. A composite material according to claim 16, wherein the metal surface is a zinc hot dipped steel surface.

18. A method of protecting a surface of a structure from corrosion, which method comprises applying to the surface a coating of a composition comprising (1) a polyurethane prepolymer resin which is moisture-curable to provide a cured polyurethane-urea resin and (2) micaceous iron oxide and subjecting the composition to curing in the presence of moisture.

19. A method according to claim 18, wherein the said surface to be protected is a metal surface.

20. A method according to claim 18 or claim 19, wherein the composition is applied at an environmental temperature no lower than -6°C.

21. A method according to any one of claims 18 to 20, wherein the composition is applied at an environmental humidity of 6 to 99% RH.
